# EUROPEAN PATENT SPECIFICATION

(11) **EP 1 738 207 B1**
(45) Date of publication and mention of the grant of the patent: **13.05.2009**
(21) Application number: 05724308.1
(22) Date of filing: 01.03.2005
(51) Int. Cl.: G02B 6/38, G02B 6/255

(54) **FIBER OPTIC SPLICE COMPONENT HAVING INTERNAL ELECTRODES**
FASEROPTISCHE SPLICEKOMPONENTE MIT INTERNEN ELEKTRODEN
COMPOSANT D'EPISSURE DE FIBRE OPTIQUE A ELECTRODES INTERNES

(30) Priority: 01.03.2004 US 790537
(43) Date of publication of application: 03.01.2007
(73) Proprietor: Corning Cable Systems LLC, Hickory, NC 28603 (US)
(72) Inventor: RENFRO, JR., James G., Hickory, NC 28601 (US); ROARK, Bryan R., Hickory, NC 28602 (US)
(74) Representative: Sturm, Christoph
(86) International application number: PCT/US2005/006734
(87) International publication number: WO 2005/085925

(56) References cited:
- WO-A-96/05526
- WO-A-96/05528
- US-A- 4 274 707
- US-A- 4 598 974
- US-A- 4 940 307
- US-A- 5 146 527
- US-A1- 2003 091 293

## Description

### FIELD OF THE INVENTION

The present invention relates to a fiber optic splice component and method for fusing optical fibers in the fiber optic splice component. More particularly, the invention is a fiber optic splice component that allows splicing of the optical fibers and sealing of the splice in a single component or a single machine.

### BACKGROUND OF THE INVENTION

There are prior art fiber optic splice components and methods for fusion splicing optical fibers and sealing a fiber optic splice. However, the components and methods do not allow for splicing and sealing the splice in a single fiber optic splice component or with a single machine.

Reference is made to the prior art documents US-A-4,940,307, US-A-4,598,974 and US-A-2003/091293.

US-A-2003/091293 discloses a ferrule adapted for use in a fiber optic splice component comprising: a body having a first end and a second end, the body having a lead-in portion at the first end and at the second end; a passageway extending from the first end to the second end of the body to position an optical fiber inserted from each end; and an opening disposed between the first and second ends in communication with the passageway to splice the optical fibers together.

US-A-4,598,974 discloses a fiber optic splice component comprising: a ferrule; a housing, the housing configured to hold the ferrule therein; and electrodes disposed adjacent to the housing.

Accordingly, the present invention is directed to a fiber optic splice component and machine that substantially obviates one or more of the problems and disadvantages in the prior art. Additional features and advantages of the invention will be set forth in the description that follows, and in part will be apparent from the description, or may be learned by practice of the invention. These objectives and other advantages of the invention will be realized and attained by the fiber optic splice component, machine and method particularly pointed out in the written description and accompanying drawings, as well as the appended claims.

### SUMMARY OF THE INVENTION

To achieve these and other advantages and in accordance with the purpose of the invention as embodied and broadly described herein, the invention is directed to a fiber optic splice component as defined in claim 1.

In another aspect, the invention is directed to a method for splicing two optical fibers in a fiber optic splice component as defined in claim 7.

In another aspect, the invention provides a fiber optic splice machine as defined in claim 17.

It is to be understood that the foregoing general description and the following detailed description are merely exemplary and explanatory and are included for the purpose of providing further understanding of the invention as claimed.

The accompanying drawings are likewise included to provide a further understanding of the invention and are incorporated in and constitute a part of the specification. The drawings illustrate several embodiments of the invention and together with the written descriptions serve to explain the principles of the invention.

### BRIEF DESCRIPTION OF THE DRAWINGS

FIG. 1 is an exploded view of an exemplary embodiment of a fiber optic splice component according the present invention;
FIG. 2 is a lateral cross section view of the fiber optic splice component of FIG. 1;
FIG. 3a is a schematic illustration of opposed optical fibers being inserted into the fiber optic splice component of FIG. 1;

FIG. 3b is a schematic illustration of the opposed optical fibers in the area of splicing in the fiber optic splice component of FIG. 1;

FIG. 3c is a schematic illustration of the opposed optical fibers being spliced in the fiber optic splice component of FIG. 1;

FIG. 3d is a schematic illustration showing a splice protection element aligned with the spliced optical fibers;

FIG. 3e is a schematic illustration of the fiber optic splice component after the splicing and sealing operations are performed;

FIG. 4 is an exemplary embodiment of a machine used to splice and protect a fiber optic splice in a fiber optic splice component according the present invention;

FIG. 5 is a lateral cross section view of the machine of FIG. 4; and

FIG. 6 is a partial top view of another exemplary embodiment of a machine to splice and protect a fiber optic splice in a fiber optic splice component according to the present invention.

### DETAILED DESCRIPTION OF THE INVENTION

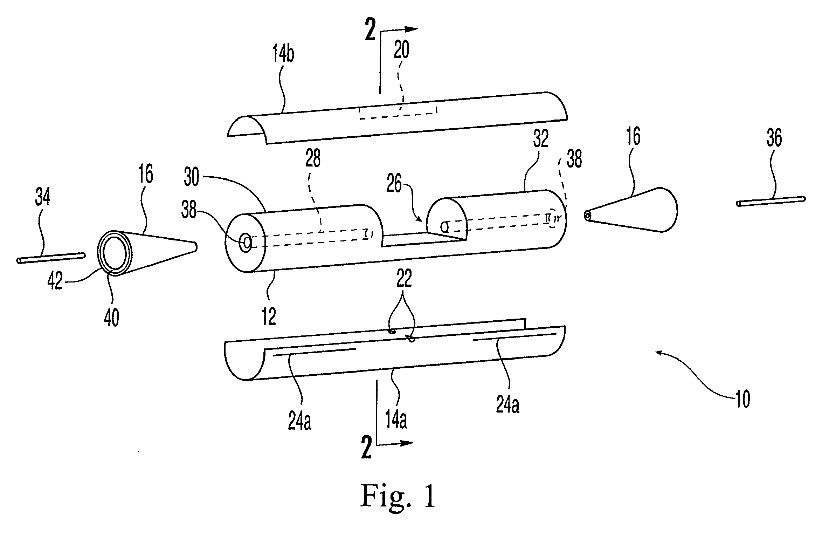

FIG. 1 illustrates an exemplary embodiment of a fiber optic splice component **10.** The fiber optic splice component **10** is preferably preassembled, with the ferrule **12** already placed in the bottom portion **14a** of the housing. The bottom portion **14a** also retains the strain relief elements **16** on either end of the ferrule **12.** The fiber optic splice component **10** also has a top portion **14b** of the housing with a protection element **20** disposed therein.

The housing is illustrated as having a generally cylindrical configuration. However, the housing could be of any desired configuration, including, for example, rectangular, oval, etc. The housing preferably made from plastic, but could be made from any appropriate material, including metal. The bottom portion **14a** preferably has two electrodes **22** on either side of the ferrule **12.** The electrodes **22** may be attached to the top edge of the bottom portion **14a** or may be integral with the bottom portion **14a** and protrude inwardly through the housing. The bottom portion **14a** may also have ribs **24a** attached to an outer surface thereof to allow for corresponding structure on the top portion **14b** to assist in joining the bottom portion **14a** with the top portion **14b.** Other methods of joining the two housing portions **14a, 14b** together would also be within the scope of the present invention. Such methods could include a hinge, projections/recesses, etc.

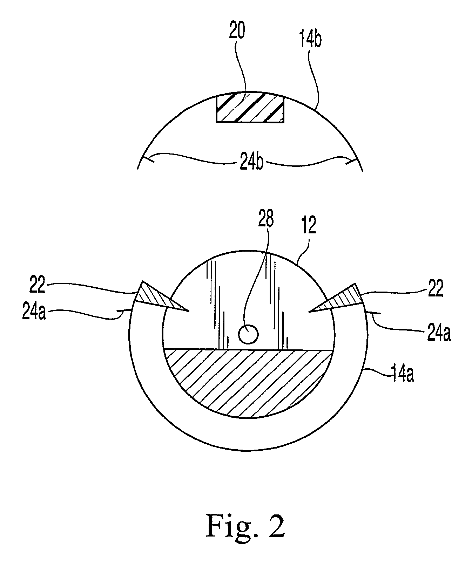

The ferrule **12** is preferably disposed in the bottom portion **14a** prior to use. The ferrule **12** has an opening **26,** preferably near the center (from either end) of the ferrule **12.** The opening **26** allows access to a passageway **28** that extends from a first end **30** to a second end **32** of the ferrule **12.** The opening **26** is large enough to allow the electrodes **22** access to the optical fibers **34, 36** for fusing. As can be seen in FIG. 2, the opening **26** extends slightly more than 180° around the ferrule **12** to fully expose the optical fibers **34, 36** extending from passageway **28.** However, the opening **26** may be greater or less than 180°, depending on the locations of the electrodes **22** and the need to expose the entire circumferences of the optical fibers **34, 36** to the electrical arc generated between the electrodes **22.** The opening **26** need only be sufficient to allow access by the electrodes **22** and the generated arc to the extent necessary to fuse the optical fibers **34, 36.** The ferrule **12** also preferably has a lead-in portion **38** on both the first end 30 and the second end **32.** The lead-in portion is larger at the very end of the ferrule **12** and narrows to about the same diameter as the passageway **28** through the ferrule **12.** The ferrule **12** can be made from thermoset, thermoplastic, or ceramic materials.

The top portion **14b** has a protection element **20** disposed therein. The protection element **20** is typically EVA (ethylene-vinyl-acetate) or some other heat sensitive material that provides similar melt and flow properties. The protection element **20** will be melted and will flow around the fused optical fibers in the ferrule 12 to provide further protection of the splice. The top portion **14b** may also have ribs **24b** as shown in FIG. 2 that engage the corresponding ribs **24a** on the bottom portion **14a.**

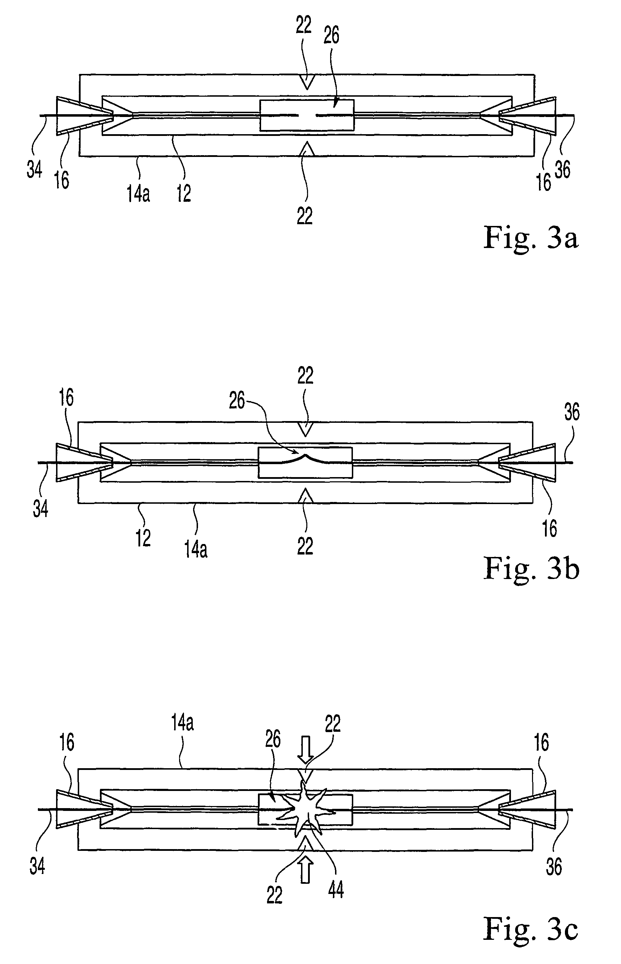

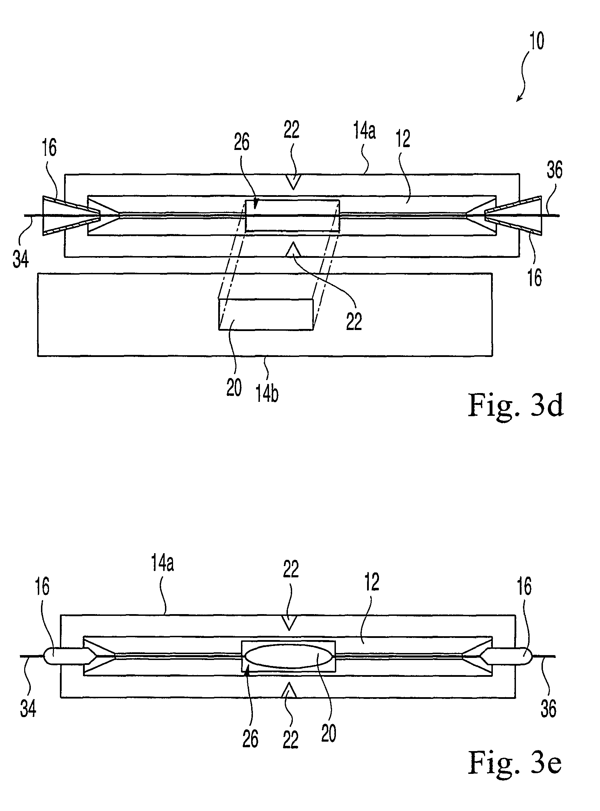

The strain relief elements **16** are used to provide strain relief for the optical fibers **34, 36.** While the strain relief elements 16 are illustrated to be frustoconical in shape, they may be of any configuration. However, the strain relief elements **16** preferably function as a lead-in for the optical fibers **34, 36** into ferrule **12.** As illustrated best is FIGS. 3a-3e, the inside diameter of each strain relief element **16** is preferably larger at the end away from the ferrule **12** and is narrower at the end toward the ferrule **12.** While not necessary, the configuration of the strain relief elements **16** is helpful in guiding the optical fibers **34, 36** into the lead-in portion **38** of the ferrule **12.** In fact, the strain relief elements **16** could be cylindrical with constant inner and outer diameters and still be within the scope of the present invention. The strain relief elements **16** preferably have two layers. A first layer **40** made of EVA or other heatable material to provide adhesion around the optical fibers **34, 36** and to hold the second layer **42.** The second layer **42** is a polyolefin that provides abrasion resistance to further protect the optical fibers. The second layer **42** may also provide some moisture protection to the fiber optic splice component **10.** The two layer material for the strain relief elements **16** may be obtained from INSULTAB, Inc. of Woburn, MA.

The fusion of the optical fibers in the fiber optic splice component **10** will now be described with reference to FIGS. 3a-3e. A fiber optic splice component **10** has an optical fiber **34, 36** inserted from either end. The optical fibers **34, 36** pass through the strain relief elements **16** and into the passageway **28** via the lead-in portions **38** of the ferrule **12.** Eventually, the optical fibers **34, 36** pass into the opening **26.** As illustrated in FIG. 3b, the operator may then advance the optical fibers **34, 36** until they are engaged in the opening **26.** While the ends of the optical fibers **34, 36** are illustrated to be in the center of opening **26,** they need not be located exactly at the center of the opening. However, the closer the optical fibers **34, 36** are to the center of the opening **26** (or wherever the electrodes **22** are located), the better the fusion splice will be. An arc **44,** as illustrated in FIG. 3c, is generated through the electrodes **22,** causing the optical fibers **34, 36** to be fused. After the optical fibers **34, 36** are fused together, as shown in FIG. 3d, the protection element **20** is placed over the fused optical fibers and heated. The melted protection element **20** then flows around the fused optical fibers **34, 36** and fills at least a portion of the opening **26.** At the same time the protection element **20** is being heated, the strain relief elements **16** are also being heated. Since the strain relief elements **16** are preferably made from the same material as the protection element **20,** they too will soften and form around the optical fibers **34, 36** at either end of the fiber optic splice component **10.** It should be noted that the strain relief elements **16** may be moved along the optical fibers **34, 36** to a location that is best suited for the particular application and do not have to be located where illustrated in the figures.

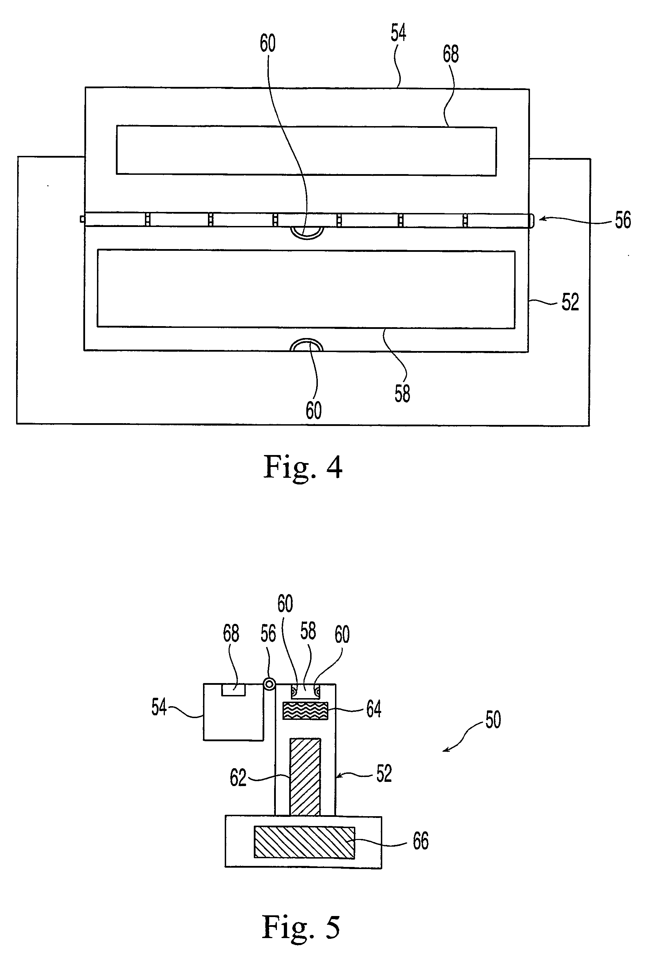

An exemplary embodiment of a machine **50** to splice and heat the fiber optic splice component **10** is illustrated in FIGS. 4 and 5. The machine **50** has a base portion **52** and a top portion **54** preferably connected by a hinge **56.** The base portion **52** has a fiber optic splice holder **58** located therein for receiving a fiber optic splice component, which may be the same as that disclosed above, but may also be of a different configuration. The fiber optic splice holder **58** has adjacent electrical contacts **60** to engage the electrodes **22** in the fiber optic splice component **10.** The base portion **52** also has an arc generator **62** (FIG. 5) that is in electrical communication with the electrical contacts **60** that engage the electrodes **22** to fuse the optical fibers **34, 36.**

Also present in the base portion **52** is a heating element **64** (FIG. 5). The heating element **64** is disposed directly under the fiber optic splice holder **58** in order to most efficiently heat the fiber optic splice component **10** and thereby melt the protection element **20** and the strain relief elements **16.** Typically the heating element **64** begins heating once the optical fibers **34, 36** have been fused. However, depending on the type of heating element used and the time required for the protection element **20** to come to temperature and the strain relief elements **16** to melt, the heating element **64** may begin heating at the same time or even before the splicing of the optical fibers **34, 36.** The sequence of splicing the optical fibers **34, 36** and heating the fiber optic splice component **10** may be initiated by the operator pressing a button or by simply closing the top portion **54** once the fiber optic splice component **10** is inserted into the machine **50.**

The base portion **52** also has a battery **66** to energize the arc generator **62** and the heating element **64.** The battery **66** is preferably a rechargeable battery that can be recharged in a charger or by a 12VDC source, such as in a vehicle.

The top portion **54** of the machine **50** has an opening **68** therein for receiving the top portion **14b** of the fiber optic splice component **10.** The top portion **14b** can be inserted into and held within the opening **68,** for example by a loose press fit, until an electrical arc is generated between the electrodes **22** of the fiber optic splice component **10** and the optical fibers **34, 36** are fused together. The top portion **14b** can then be removed from the opening **68** and secured to the bottom portion **14a,** as previously described. Alternatively, the top portion **14b** may be secured to the bottom portion **14a** when the top portion **54** of the machine **50** is rotated about the hinge **56** and closed onto the base portion **52.**

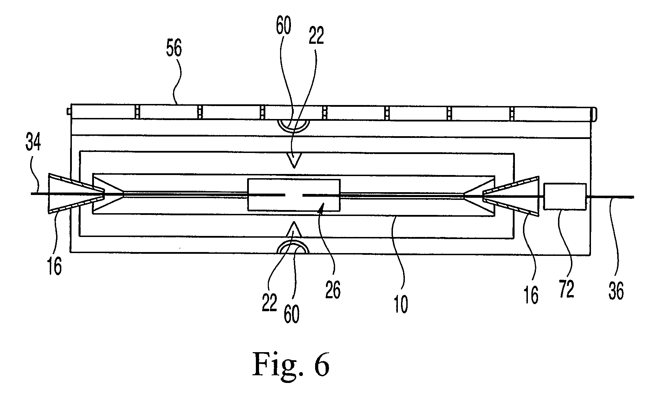

FIG. 6 illustrates another exemplary embodiment of a splice machine **70,** which is similar to the prior embodiment. However, included in this embodiment of machine **70** is a clamping mechanism **72** that holds at least one of the optical fibers **34, 36.** For example, the operator inserts the optical fiber **36** into the clamping mechanism**72,** which closes around the optical fiber **36.** The clamping mechanism **72** then moves relative to the fiber optic splice component **10** and inserts the optical fiber **36** into the opening **26** in the correct location for fusion splicing the two optical fibers **34, 36** together. The clamping mechanism **72** may be moved by virtue of a piezo-driven mechanism in a known manner. However, the clamping mechanism may also be driven by a springloaded mechanism. Typically, the clamping mechanism **72** initially inserts the optical fiber **36** into the opening **26** such that a small gap remains between the optical fibers **34, 36** so that the ends of the optical fibers may be cleaned or otherwise processed prior to fusing. The clamping mechanism **72** then operates to move the end of the optical fiber **36** into physical engagement with the end of the optical fiber **34** during the fusing process. However, the clamping mechanism **72** may also operate to insert the optical fiber **36** into the opening **26** such that the ends of the optical fibers **34, 36** are initially in physical engagement, or are even pre-loaded. Regardless, the clamping mechanism **72** preferably biases the end of the optical fiber **36** against the end of the optical fiber **34** as the optical fibers **34, 36** are fused together to avoid the formation of any void between the optical fibers.

It will be apparent to those skilled in the art that various modifications and variations can be made in the fiber optic splice component and method for fusing optical fibers of the present invention without departing from the scope of the claims. Thus, it is intended that the present invention cover the modifications and variations of this invention provided they come within the scope of the appended claims.

## Claims

1. A fiber optic splice component comprising:
a ferrule (12) having a passageway (28) extending from a first end to a second end thereof for receiving an optical fiber inserted from each end and having an opening (26) between the first and second ends in communication with the passageway (28);
a housing, the housing configured to hold the ferrule (12) therein;
at least two electrodes (22) disposed in the housing and adjacent to the opening (26) in the ferrule (12) for fusion splicing the optical fibers; and
a protection element (20) to seal the fusion spliced optical fibers by melting said protection element (20) to flow around the fused optical fibers.

2. The fiber optic splice component of claim 1 wherein the protection element (20) is a heat shrink element.

3. The fiber optic splice component of claim 1 further comprising a strain relief element (16) disposed in the housing.

4. The fiber optic splice component of claim 1 further comprising a lead-in portion (38) adjacent one of the first end and the second end to guide the optical fibers into the passageway (28).

5. The fiber optic splice component of claim 1 further comprising a strain relief element (16) disposed in the housing and a lead-in portion (38) adjacent one of the first end and the second end and disposed in the strain relief element.

6. The fiber optic splice component of claim 1 further comprising a lead-in portion (38) in the ferrule (12) at each of the first end and the second end.

7. A method for splicing two optical fibers together in a fiber optic splice component comprising:
providing the fiber optic splice component, the fiber optic splice component comprising a ferrule (12) having a passageway (28) extending from a first end to a second end to position an optical fiber inserted from each end and having an opening (26) between the first and second ends in communication with the passageway, a housing, and at least two electrodes (22) disposed in the housing adjacent to the opening in the ferrule for fusion splicing the optical fibers;
inserting the optical fibers into respective ends of the fiber optic splice component;
initiating a fiber optic splice machine, the splice machine:
applying a voltage to the electrodes to cause an arc to be generated across the opening of the ferrule thereby fusing the optical fibers; and
heating a splice protection element (20) disposed in the housing to melt and form around the fused optical fibers.

8. The method for splicing two optical fibers in a fiber optic splice component of claim 7, wherein the applying and heating steps are initiated simultaneously.

9. The method for splicing two optical fibers in a fiber optic splice component of claim 7, wherein the applying and heating steps are initiated in series.

10. The method for splicing two optical fibers in a fiber optic splice component of claim 7, wherein the applying step is initiated before the heating step.

11. The method for splicing two optical fibers in a fiber optic splice component of claim 7, wherein only one of the applying step and the heating step are performed upon initiating the fiber optic splice machine.

12. The method for splicing two optical fibers in a fiber optic splice component of claim 7, wherein the fiber optic splice machine has a base portion and a top portion, and wherein the top portion closes on the base portion to initiate the fiber optic splice machine.

13. The method for splicing two optical fibers in a fiber optic splice component of claim 7, wherein the inserting step includes inserting the optical fibers into the opening and into physical engagement with one another.

14. The method for splicing two optical fibers in a fiber optic splice component of claim 7, wherein the inserting step includes inserting at least one optical fiber into a clamping mechanism and wherein the fiber optic splice machine further performs causing the clamping mechanism to move the at least one optical fiber into the opening for fusing the optical fibers.

15. The method for splicing two optical fibers in a fiber optic splice component of claim 14, wherein the clamping mechanism is spring driven.

16. The method for splicing two optical fibers in a fiber optic splice component of claim 14, wherein the clamping mechanism is piezo driven.

17. A fiber optic splice machine comprising:
a base portion (52), the base portion comprising:
a fiber optic splice holder (58) for holding a portion of a fiber optic splice component (10) according to claim 1;
electrical contacts (60) adjacent the fiber optic splice holder and in communication with an arc generator (62); said electrical contacts (60) being adapted to engage the electrodes (22) of said fiber optic splice component (10);
a heating element (64) disposed directly under the fiber optic splice holder; and
a top portion (54) for covering the base portion (52) and configured to hold a top portion of said fiber optic splice component (10).

18. The fiber optic splice machine of claim 17, further comprising a battery (66) to energize the arc generator (62) and the heating element (64).

## Patentansprüche

1. Faseroptische Spleißkomponente, umfassend:
eine Ferrule (12) mit einem Durchgang (28), der von einem ersten Ende zu einem zweiten Ende davon verläuft, zum Aufnehmen einer von jedem Ende eingeführten optischen Faser, und mit einer Öffnung (26) zwischen dem ersten und zweiten Ende in Kommunikation mit dem Durchgang (28);
ein Gehäuse, wobei das Gehäuse konfiguriert ist, die Ferrule (12) darin zu halten;
mindestens zwei in dem Gehäuse und bei der Öffnung (26) in der Ferrule (12) angeordnete Elektroden (22) zum thermischen Spleißen der optischen Fasern; und ein Schutzelement (20) zum Abdichten der thermisch gespleißten optischen Fasern durch Schmelzen des Schutzelements (20), damit es um die gespleißten optischen Fasern herum fließt.

2. Faseroptische Spleißkomponente nach Anspruch 1, wobei das Schutzelement (20) ein Wärmeschrumpfelement ist.

3. Faseroptische Spleißkomponente nach Anspruch 1, weiterhin umfassend ein in dem Gehäuse angeordnetes Zugentlastungselement (16).

4. Faseroptische Spleißkomponente nach Anspruch 1, weiterhin umfassend einen Einführungsabschnitt (38) neben einem des ersten Endes und des zweiten Endes, um die optischen Fasern in den Durchgang (28) zu führen.

5. Faseroptische Spleißkomponente nach Anspruch 1, weiterhin umfassend ein in dem Gehäuse angeordnetes Zugentlastungselement (16) und einen Einführungsabschnitt (38) neben einem des ersten und zweiten Endes und in dem Zugentlasungselement angeordnet.

6. Faseroptische Spleißkomponente nach Anspruch 1, weiterhin umfassend einen Einführungsabschnitt (38) in der Ferrule (12) an jedem des ersten Endes und des zweiten Endes.

7. Verfahren zum Zusammenspleißen von zwei optischen Fasern in einer faseroptischen Spleißkomponente, umfassend:
Bereitstellen der faseroptischen Spleißkomponente, wobei die faseroptische Spleißkomponente eine Ferrule (12) mit einem Durchgang (28) umfaßt, der von einem ersten Ende zu einem zweiten Ende verläuft, um eine von jedem Ende eingeführte optische Faser zu positionieren, und mit einer Öffnung (26) zwischen dem ersten und zweiten Ende in Kommunikation mit dem Durchgang, ein Gehäuse, und mindestens zwei in dem Gehäuse neben der Öffnung in der Ferrule angeordnete Elektroden (22) zum thermischen Spleißen der optischen Fasern;
Einführen der optischen Fasern in jeweilige Enden der faseroptischen Spleißkomponente;
Initiieren einer faseroptischen Spleißmaschine, wobei die Spleißmaschine:
an die Elektroden eine Spannung anlegt, um das Erzeugen eines Lichtbogens an der Öffnung der Ferrule zu bewirken, wodurch die optischen Fasern verschmolzen werden; und
Erhitzen eines in dem Gehäuse angeordneten Spleißschutzelements (20) zum Schmelzen und Formen um die verschmolzenen optischen Fasern herum.

8. Verfahren zum Spleißen von zwei optischen Fasern in einer faseroptischen Spleißkomponente von Anspruch 7, wobei die Schritte des Anlegens und Erhitzens gleichzeitig initiiert werden.

9. Verfahren zum Spleißen von zwei optischen Fasern in einer faseroptischen Spleißkomponente von Anspruch 7, wobei die Schritte des Anlegens und Erhitzens in Reihe initiiert werden.

10. Verfahren zum Spleißen von zwei optischen Fasern in einer faseroptischen Spleißkomponente von Anspruch 7, wobei der Schritt des Anlegens vor dem Schritt des Erhitzens initiiert wird.

11. Verfahren zum Spleißen von zwei optischen Fasern in einer faseroptischen Spleißkomponente von Anspruch 7, wobei nur der Schritt des Anlegens oder der Schritt des Erhitzens beim Initiieren der faseroptischen Spleißmaschine durchgeführt wird.

12. Verfahren zum Spleißen von zwei optischen Fasern in einer faseroptischen Spleißkomponente von Anspruch 7, wobei die faseroptische Spleißmaschine einen Basisabschnitt und einen Oberteilabschnitt aufweist und wobei der Oberteilabschnitt an dem Basisabschnitt abschließt, um die faseroptische Spleißmaschine zu initiieren.

13. Verfahren zum Spleißen von zwei optischen Fasern in einer faseroptischen Spleißkomponente von Anspruch 7, wobei der Einführschritt das Einführen der optischen Fasern in die Öffnung und in physiche Ineingriffnahme miteinander beinhaltet.

14. Verfahren zum Spleißen von zwei optischen Fasern in einer faseroptischen Spleißkomponente von Anspruch 7, wobei der Einführschritt das Einführen mindestens einer optischen Faser in einen Klemmechanismus beinhaltet und wobei die faseroptische Spleißmaschine weiterhin verursacht, zu bewirken, daß der Klemmechanismus die mindestens eine optische Faser in die Öffnung zum Verschmelzen der optischen Fasern bewegt.

15. Verfahren zum Spleißen von zwei optischen Fasern in einer faseroptischen Spleißkomponente von Anspruch 14, wobei der Klemmechanismus federangetrieben ist.

16. Verfahren zum Spleißen von zwei optischen Fasern in einer faseroptischen Spleißkomponente von Anspruch 14, wobei der Klemmechanismus piezoangetrieben ist.

17. Faseroptische Spleißmaschine, umfassend:
einen Basisabschnitt (52), wobei der Basisabschnitt folgendes umfaßt:
eine faseroptische Spleißhalterung (58) zum Halten eines Abschnitts einer faseroptischen Spleißkomponente (10) nach Anspruch 1;
elektrische Kontakte (60) neben der faseroptischen Spleißhalterung und in Kommunikation mit einem Lichtbogengenerator (62); wobei die elektrischen Kontakte (60) dafür ausgelegt sind, die Elektroden (22) der faseroptischen Spleißkomponente (10) in Eingriff zu nehmen;
ein direkt unter der faseroptischen Spleißhalterung angeordnetes Heizelement (64) und
einen Oberteilabschnitt (54) zum Bedecken des Basisabschnitts (52) und konfiguriert zum Halten eines Oberteilabschnitts der faseroptischen Spleißkomponente (10).

18. Faseroptische Spleißmaschine nach Anspruch 17, weiterhin umfassend eine Batterie (66) zum Bestromen des Lichtbogengenerators (62) und des Heizelements (64).

## Revendications

1. Composant d'épissure de fibre optique comprenant :
une ferrule (12) comportant un passage (28) s'étendant depuis une première extrémité jusqu'à une seconde extrémité de celle-ci afin de recevoir une fibre optique insérée depuis chaque extrémité et comportant une ouverture (26) entre les première et seconde extrémités en communication avec le passage (28),
un logement, le logement étant configuré pour y maintenir la ferrule (12),
au moins deux électrodes (22) disposées dans le logement et contiguës à l'ouverture (26) dans la ferrule (12) en vue d'une épissure par fusion des fibres optiques, et
un élément de protection (20) destiné à sceller les fibres optiques épissées par fusion en faisant fondre ledit élément de protection (20) pour qu'il s'écoule autour des fibres optiques fondues.

2. Composant d'épissure de fibre optique selon la revendication 1, dans lequel l'élément de protection (20) est un élément thermoretractable.

3. Composant d'épissure de fibre optique selon la revendication 1, comprenant en outre un élément limiteur de contrainte (16) disposé dans le logement.

4. Composant d'épissure de fibre optique selon la revendication 1, comprenant en outre une partie de connexion d'entrée (38) contiguë à l'une de la première extrémité et de la seconde extrémité permettant de guider les fibres optiques dans le passage (28).

5. Composant d'épissure de fibre optique selon la revendication 1, comprenant en outre un élément limiteur de contrainte (16) disposé dans le logement et une partie de connexion d'entrée (38) contiguë à l'une de la première extrémité et de la seconde extrémité et disposée dans l'élément limiteur de contrainte.

6. Composant d'épissure de fibre optique selon la revendication 1, comprenant en outre une partie de connexion d'entrée (38) dans la ferrule (12) à chacune de la première extrémité et de la seconde extrémité.

7. Procédé permettant d'épisser deux fibres optiques ensemble dans un composant d'épissure de fibre optique comprenant :
la fourniture du composant d'épissure de fibre optique, le composant d'épissure de fibre optique comprenant une ferrule (12) comportant un passage (28) s'étendant depuis une première extrémité jusqu'à une seconde extrémité afin de positionner une fibre optique insérée à partir de chaque extrémité et comportant une ouverture (26) entre les première et seconde extrémités en communication avec le passage, un logement et au moins deux électrodes (22) disposées dans le logement contigu à l'ouverture dans la ferrule en vue d'une épissure par fusion des fibres optiques,
l'insertion des fibres optiques dans les extrémités respectives du composant d'épissure de fibre optique,
le lancement d'une machine d'épissure de fibre optique, la machine d'épissure :
appliquant une tension aux électrodes afin de provoquer un arc devant être généré au travers de l'ouverture de la ferrule en faisant ainsi fondre les fibres optiques, et
chauffant un élément de protection d'épissure (20) disposé dans le logement afin de le faire fondre et de le façonner autour des fibres optiques fondues.

8. Procédé permettant d'épisser deux fibres optiques dans un composant d'épissure de fibre optique selon la revendication 7, dans lequel les étapes d'application et de chauffage sont lancées simultanément.

9. Procédé permettant d'épisser deux fibres optiques dans un composant d'épissure de fibre optique selon la revendication 7, dans lequel les étapes d'application et de chauffage sont lancées en série.

10. Procédé permettant d'épisser deux fibres optiques dans un composant d'épissure de fibre optique selon la revendication 7, dans lequel l'étape d'application est lancée avant l'étape de chauffage.

11. Procédé permettant d'épisser deux fibres optiques dans un composant d'épissure de fibre optique selon la revendication 7, dans lequel seule l'une de l'étape d'application et de l'étape de chauffage sont effectuées lors du lancement de la machine d'épissure de fibre optique.

12. Procédé permettant d'épisser deux fibres optiques dans un composant d'épissure de fibre optique selon la revendication 7, dans lequel la machine d'épissure de fibre optique comporte une partie de base et une partie supérieure, et dans lequel la partie supérieure se referme sur la partie de base afin de lancer la machine d'épissure de fibre optique.

13. Procédé permettant d'épisser deux fibres optiques dans un composant d'épissure de fibre optique selon la revendication 7, dans lequel l'étape d'insertion inclut l'insertion des fibres optiques dans l'ouverture pour les mettre en prise physique l'une avec l'autre.

14. Procédé permettant d'épisser deux fibres optiques dans un composant d'épissure de fibre optique selon la revendication 7, dans lequel l'étape d'insertion inclut l'insertion d'au moins une fibre optique dans un mécanisme de blocage et dans lequel la machine d'épissure de fibre optique entraîne en outre le mécanisme de blocage à déplacer la ou les fibres optiques dans l'ouverture afin de faire fondre les fibres optiques.

15. Procédé permettant d'épisser deux fibres optiques dans un composant d'épissure de fibre optique selon la revendication 14, dans lequel le mécanisme de blocage est piloté par un ressort.

16. Procédé permettant d'épisser deux fibres optiques dans un composant d'épissure de fibre optique selon la revendication 14, dans lequel le mécanisme de blocage est piloté par un composant piézoélectrique.

17. Machine d'épissure de fibre optique comprenant :
une partie de base (52), la partie de base comprenant :
un dispositif de maintien d'épissure de fibre optique (58) permettant de maintenir une partie de composant d'épissure de fibre optique (10) conforme à la revendication 1,
des contacts électriques (60) contigus au dispositif de maintien d'épissure de fibre optique et en communication avec un générateur d'arc (62), lesdits contacts électriques (60) étant conçus pour mettre en prise les électrodes (22) dudit composant d'épissure de fibre optique (10),
un élément de chauffage (64) disposé directement sous le dispositif de maintien d'épissure de fibre optique, et
une partie supérieure (54) permettant de recouvrir la partie de base (52) et configurée pour maintenir une partie supérieure dudit composant d'épissure de fibre optique (10).

18. Machine d'épissure de fibre optique selon la revendication 17, comprenant en outre une batterie (66) permettant de mettre sous tension le générateur d'arc (62) et l'élément de chauffage (64).
